(19) **Europäisches Patentamt**
**European Patent Office**
**Office européen des brevets**

(11) **EP 1 114 928 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
*F02D 41/40* (2006.01) *F02M 65/00* (2006.01)

(21) Anmeldenummer: **00127911.6**

(22) Anmeldetag: **20.12.2000**

(54) **Verfahren zur Ermittlung von Einspritzparametern einer Dieselbrennkraftmaschine**

Method for the determining of injection parameters for a diesel internal-combustion engine

Procédé de détermination des paramètres d'injection d'un moteur diesel

(84) Benannte Vertragsstaaten:
**AT BE CH CY DE DK ES FI FR GB GR IE IT LI LU MC NL PT SE TR**

(30) Priorität: **07.01.2000 DE 10000398**

(43) Veröffentlichungstag der Anmeldung:
**11.07.2001 Patentblatt 2001/28**

(73) Patentinhaber: **Volkswagen Aktiengesellschaft 38436 Wolfsburg (DE)**

(72) Erfinder:
• **Pott, Ekkehard, Dr.**
  **38518 Gifhorn (DE)**
• **Bosse, Rolf, Dr.**
  **38440 Wolfsburg (DE)**

(56) Entgegenhaltungen:
**EP-A- 0 621 400          EP-A- 0 844 380**
**DE-A- 19 602 065          DE-A- 19 927 485**
**DE-C- 19 750 226**

**Beschreibung**

Die vorliegende Erfindung betrifft ein Verfahren zur Ermittlung von Einspritzparametern einer Dieselbrennkraftmaschine.

Beim Betrieb von Dieselbrennkraftmaschinen oder Dieselmotoren mit einem nachgeschalteten $NO_x$-Speicherkatalysator ist zur $NO_x$-Regeneration und Entschwefelung des Katalysators ein periodischer Betrieb mit Lambda < 1 erforderlich. Das Erreichen dieses Betriebszustandes wurde bisher durch eine Saugluftandrosselung und/oder eine Anhebung der Abgasrückführungs- oder EGR-Rate und/oder eine Ladedrucksenkung umgesetzt. Damit ist jedoch bei hohen Lastanforderungen eine Betriebsweise mit Lambda < 1 nicht möglich, da die Motorandrosselung zu Leistungsverlusten führt. Bei hohen Drehzahlen kann es zudem zu einer verstärkten Weissrauchbildung kommen, so daß diese Art der Einstellung und Durchführung der erforderlichen fetten Betriebsweise nicht für den gesamten Kennfeldbereich geeignet ist. Überdies ist bei einem motorischen Betrieb mit Lambda etwa gleich 1 mit einem Anstieg der Partikelemission zu rechnen.

Bei Gemischaufbereitungssystemen mit der Möglichkeit zur Nacheinspritzung kann diese ebenfalls zur Anfettung mit herangezogen werden. Eine Abgasanfettung ausschließlich über die Nacheinspritzung ist jedoch als kritisch zu bewerten, da die Kombination von hohem Sauerstoffgehalt und hohen HC-Konzentrationen zu einer hohen thermischen Katalysatorbelastung führt. Günstiger ist daher eine Kombination aus Drosselmaßnahmen und einer Nacheinspritzung, wobei durch die Androsselung nur ein Teil der Anfettung bis etwa in den Lambdabereich 1,1 - 1,2 erfolgt und der Rest der Anfettung bis zu dem gewünschten Lambdawert durch die Nacheinspritzung erfolgt. Diese Vorgehensweise besitzt ferner den Vorteil, daß bei der Regelung auf einen vorgegebenen Lambdawert die Nacheinspritzmenge schneller als der vergleichsweise träge Gaswert den Abweichungen zwischen Ist- und Sollwert angepaßt werden kann.

Aus der DE 196 02 065 A ist bereits bekannt, bei einer selbstzündenden Brennkraftmaschine zuerst eine Haupteinspritzung und dann eine Nacheinspritzung zur Zündung des Kraftstoffs vorzunehmen. Dabei sind Grenzkurven, insbesondere für das späteste Ende der Nacheinspritzung und dem frühesten Beginn der Haupteinspritzung vorgesehen. Von diesen Grenzkurven ausgehend werden Einspritzparameter festgelegt, derart dass eine angestrebte Einspritzung vor dem frühesten Beginn der Haupteinspritzung und nach dem spätesten Ende der Nacheinspritzung verboten werden. Aufgrund dieses Verbots werden gegebenenfalls andere Einsatzparameter gewählt.

Die Aufgabe der vorliegenden Erfindung besteht in der Schaffung eines Verfahrens, das bei Vermeidung der obengenannten Nachteile herkömmlicher Verfahren in Abhängigkeit von den Betriebsbedingungen eine möglichst optimale Wahl der Einspritzparameter zur Erreichung eines gewünschten Lambdawertes oder zumindest eines um einen möglichst geringen Betrag von diesem Wunsch-Lambdawert abweichenden Lambdawertes gewährleistet.

Diese Aufgabe wird bei einem gattungsgemäßen Verfahren erfindungsgemäß die Merkmale des Anspruchs 1 gelöst.

Die Nacheinspritzparameter werden hierbei vorzugsweise so festgesetzt, daß das Nacheinspritzende SE_NE gleich dem maximal spätesten Nacheinspritzende $SE\_NE_{mx}$ und die Nacheinspritzdauer SD_NE gleich einer ermittelten betriebspunktabhängigen kurbelwellenwinkelbezogenen Soll-Nacheinspritzdauer $SD\_NE_{soll}$ ist. Der zugehörige Nacheinspritzbeginn SB_NE entspricht damit dem sich aus der Differenz dieser beiden Werte ergebenden kurbelwellenwinkelbezogenen Soll-Nacheinspritzbeginn $SB\_NE_{soll}$.

Der Haupteinspritzbeginn SB_HE, die Haupteinspritzdauer SD_HE und das Haupteinspritzende SE_HE werden vorzugsweise gleich einem ersten vorgegebenen kurbelwellenwinkelbezogenen Soll-Haupteinspritzbeginn $SB\_HE_{soll}$, einer betriebspunktabhängig vorgegebenen kurbelwellenwinkelbezogenen Soll-Haupteinspritzdauer $SD\_HE_{soll}$ und einem sich additiv aus diesen beiden Werten ergebenden Soll-Haupteinspritzende $SE\_HE_{soll}$ gewählt, falls dieses nicht später als ein maximal spätestes kurbelwellenwinkelbezogenen Soll-Haupteinspritzende $SE\_HE_{mxsoll}$ liegt, das so festgelegt wird, daß ein zeitlicher Mindestabstand D_HE-NE zwischen Haupt- und Nacheinspritzung HE bzw. NE eingehalten wird. Alternativ zu der genannten Bedingung $SE\_HE_{mxsoll} \geq SE\_HE_{soll}$ kann selbstverständlich auch überprüft werden, ob der erste vorgegebene Soll-Haupteinspritzbeginn $SB\_HE_{soll}$ nicht später liegt als ein spätester kurbelwellenwinkelbezogener Soll-Haupteinspritzbeginn $SB\_HE_{mxsoll}$, der durch Subtraktion der ermittelten Soll-Haupteinspritzdauer $SD\_HE_{soll}$ von dem erwähnten spätesten Soll-Haupteinspritzende $SE\_HE_{mxsoll}$) bestimmt wird. Bei Nichterfüllung dieser äquivalenten Bedingungen werden die gewünschten Haupt- und Nacheinspritzparameter SB_HE, SD_HE und/oder SE_HE sowie SB_NE, SD_NE und/oder SE_NE in Abhängigkeit von zumindest einem nachstehend noch näher definierten weiteren kurbelwellenwinkelbezogenen vorgegebenen Haupteinspritzbeginn $SB\_HE_{mn1}$ bzw. $SB\_HE_{mn2}$ bestimmt.

Als Soll-Haupteinspritzbeginn $SB\_HE_{soll}$ wird hierbei insbesondere ein optimaler Wunsch-Haupteinspritzbeginn verwendet.

Der Haupteinspritzbeginn SB_HE wird vorzugsweise gleich dem spätesten Soll-Haupteinspritzbeginn $SB\_HE_{mxsoll}$ gewählt, falls dieser zeitlich nicht früher liegt als ein vor dem ersten Soll-Haupteinspritzbeginn $SB\_HE_{soll}$ liegender zweiter vorgegebener kurbelwellenwinkelbezogener Haupteinspritzbeginn $SB\_HE_{mn1}$, während die Haupteinspritzdauer SD_HE gleich der Soll-Haupteinspritzdauer $SD\_HE_{soll}$ gewählt wird. Das Haupteinspritzende SE_HE entspricht somit dem spätesten Soll-Haupteinspritzende $SE\_HE_{mxsoll}$. Die Nacheinspritzparameter SB_NE, SD_NE und SE_NE werden nicht verändert, so daß sie wiederum ihren entsprechenden Soll-Werten $SB\_NE_{soll}$, $SD\_NE_{soll}$ und $SE\_NE_{soll}$ entsprechen. Ansonsten erfolgt die Festlegung der genannten Haupt- und Nacheinspritzparameter in Abhängigkeit von dem zweiten und/oder zumindest einem weiteren vorgegebenen Haupteinspritzbeginn. Als zweiter vorgegebener Haupteinspritzbeginn $SB\_HE_{mn1}$ wird hierbei insbesondere ein festgelegter frühester Haupteinspritzbeginn verwendet, der durch die Einspritzdruckbereitstellung der Kraftstoffeinspritzvorrichtungen der Dieselbrennkraftmaschine und/oder akustische Gründe und/oder weitere bekannte limitierende Parameter bestimmt ist.

Wenn der maximal späteste Soll-Haupteinspritzbeginn $SB\_HE_{mxsoll}$ jedoch früher liegt als der zweite vorgegebene Haupteinspritzbeginn $SB\_HE_{mn1}$, wird aus diesem und der ermittelten Soll-Haupteinspritzdauer $SD\_HE_{soll}$ vorzugsweise zunächst durch einfache Addition ein erstes neues Haupteinspritzende $SE\_HE_{neu}$ und dann durch weitere Addition des Mindestabstandes D_HE-NE zwischen Haupt- und Nacheinspritzung HE bzw. NE ein erster neuer Nacheinspritzbeginn $SB\_NE_{mn}$ ermittelt. Da das Nacheinspritzende SE_NE, wie oben bereits erwähnt wurde, durch das maximal späteste Nacheinspritzende $SE\_NE_{mx}$ festgelegt ist, ist damit auch eine realisierbare erste neue Nacheinspritzdauer $SD\_NE_{mn}$ eindeutig bestimmt.

Die Differenz zwischen dem sich mit den neuen Nacheinspritzparametern ergebenden Lambdawert und einem Wunsch-Lambdawert wird nun in eine verstärkte Androsselung und/oder Änderung der Abgasrückführungsrate und/oder Ladeddruckänderung umgerechnet. Die sich bei der Umsetzung dieser Maßnahmen ergebende Momentenänderung wird durch eine Änderung der Haupteinspritzdauer dSD_HE kompensiert. Durch Addition dieses Wertes zu der Soll-Haupteinspritzdauer $SD\_HE_{soll}$ wird nun eine erste neue Haupteinspritzdauer $SD\_HE_{neu}$ bestimmt, so daß in Kombination mit dem ersten neuen Haupteinspritzende $SE\_HE_{neu}$ gleichzeitig auch der erste neue Haupteinspritzbeginn $SB\_HE_{neu}$ festgelegt ist. Falls dieser Wert größer oder gleich einem maximal frühesten dritten Haupteinspritzbeginn $SB\_HE_{mn2}$ ist, werden die Haupt- und Nacheinspritzparameter gleich diesen ersten neuen Haupt- und Nacheinspritzparametern gewählt.

Falls der erste neue Haupteinspritzbeginn $SB\_HE_{neu}$ jedoch vor dem maximal frühesten dritten Haupteinspritzbeginn $SB\_HE_{mn2}$ liegen sollte, werden die Haupt- und Nacheinspritzparameter in Abhängigkeit von diesem Wert und von der ersten neuen Haupteinspritzdauer $SD\_HE_{neu}$ bestimmt. Als dritter vorgegebener Haupteinspritzbeginn $SB\_HE_{mn2}$ wird vorzugsweise ein kurbelwellenwinkelbezogenen in einem bestimmten Abstand vor dem zweiten Haupteinspritzbeginn liegender, nicht unterschreitbarer maximal frühester Haupteinspritzbeginn verwendet.

Bei der obengenannten Wahl der Haupt- und Nacheinspritzparameter wird gegebenenfalls mit Unterstützung durch eine Saugluftandrosselung und/oder Ladedruckänderung und/oder Änderung der Abgasrückführungsrate (EGR-Rate) ein vorzugsweise geforderter Wunsch-Lambdawert eingehalten.

Bei Nichterfüllung der genannten Bedingung werden der Haupteinspritzbeginn SB_HE und die Haupteinspritzdauer SD_HE vorzugsweise gleich dem dritten vorgegebenen Haupteinspritzbeginn $SB\_HE_{mn2}$ bzw. gleich der ersten neuen Haupteinspritzdauer $SD\_HE_{neu}$ gewählt, so daß das Haupteinspritzende SE_HE gleich der zweiten neuen Haupteinspritzdauer $SD\_HE_{neu2}$ entspricht. Der Nacheinspritzbeginn SB_NE wird gleich einem zweiten neuen Nacheinspritzbeginn $SB\_NE_{mn2}$ gewählt, der durch Addition des vorgegebenen Mindestabstandes zwischen Haupt- und Nacheinspritzung D_HE-NE zu dem zweiten neuen Haupteinspritzende $SE\_HE_{neu2}$ ermittelt wird. Da das Nacheinspritzende SE_NE, wie bereits erwähnt wurde, durch das maximal späteste Nacheinspritzende $SE\_NE_{mx}$ bestimmt ist, ist damit auch die Nacheinspritzdauer SD_NE durch die Differenz zwischen dem spätesten Nacheinspritzende $SE\_NE_{mx}$ und dem zweiten neuen Nacheinspritzbeginn $SB\_NE_{mn2}$ festgelegt.

Im geforderten Last-Drehzahl-Betriebspunkt wird hierbei gegebenenfalls mit Unterstützung durch eine Saugluftandrosselung, und/oder Ladedruckänderung und/oder Änderung der Abgasrückführungsrate ein Lambda-Wert eingehalten, der um einen möglichst geringen Betrag von einem geforderten Wunsch-Lambdawert auch in Richtung "mager" verschoben ist.

Weitere Einzelheiten, Merkmale und Vorteile der vorliegenden Erfindung ergeben sich nicht nur aus den zugehörigen Ansprüchen - für sich und/oder in Kombination - sondern auch aus der nachfolgenden Beschreibung eines bevorzugten erfindungsgemäßen Ausführungsbeispiels in Verbindung mit den zugehörigen Zeichnungen. In den Zeichnungen zeigen:

Fig. 1   ein Flußdiagramm des erfindungsgemäßen Ausführungsbeispiels;

Fig. 2   die Festlegung der Einspritzparameter bei Erfüllung der an der Verzweigungsstelle S5 des Flußdiagramms gemäß Fig. 1 angegebenen Bedienung;

Fig. 3   die Festlegung der Einspritzparameter bei Nichterfüllung der an der Verzweigungsstelle S6 des Flußdiagramms gemäß Fig. 1 angegebenen Bedienung;

Fig. 4   die Festlegung der Einspritzparameter bei Nichterfüllung der an der Verzweigungsstelle S11 des Flußdiagramms gemäß Fig. 1 angegebenen Bedienung; und

Fig. 5   die Festlegung der Einspritzparameter bei Erfüllung der an der Verzweigungsstelle S11 des Flußdiagramms gemäß Fig. 1 angegebenen Bedienung.

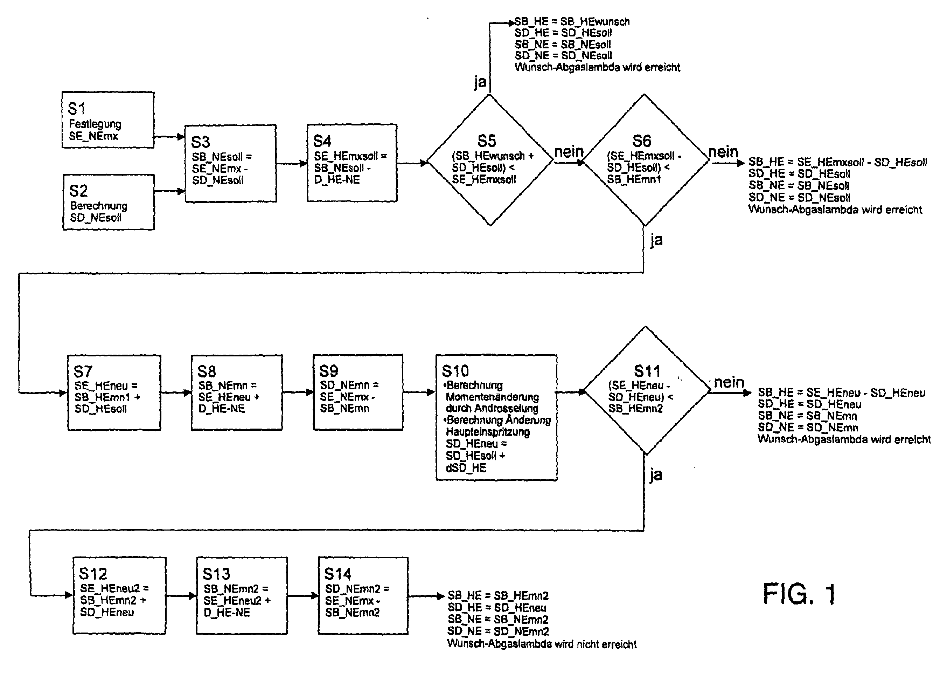

Bei dem in Fig. 1 dargestellten erfindungsgemäßen Ausführungsbeispiel wird in einem ersten Schritt S1 zunächst ein kurbelwellenwinkelbezogenes maximal zulässiges spätestes Nacheinspritzende SE_NE$_{mx}$ festgelegt, das beispielsweise durch die Tendenz zur Ölfilmauswaschung bei späten Spritzenden oder (z.B. bei Pumpe-Düse-Motoren) durch das Ende der Mindest-Einspritzdruckbereitstellung bestimmt ist.

In einem zweiten Schritt S2 wird nun eine betriebspunktabhängige kurbelwellenwinkelbezogene Soll-Nacheinspritzdauer SD_NE$_{soll}$ berechnet oder bestimmt, die erforderlich ist, um das Abgas von dem durch Androsselung, Anhebung der Abgasrückführungsrate (EGR-Rate) und/oder Ladedrucksenkung erreichten Lambdawert auf den gewünschten Soll-Lambdawert anzufetten.

Anschließend wird in einem dritten Schritt S3 durch Subtraktion der Soll-Nacheinspritzdauer SD_NE$_{soll}$ von dem maximal spätesten Nacheinspritzende SE_NE$_{mx}$ der zugehörige kurbelwellenwinkelbezogene Soll-Nacheinspritzbeginn SB_NE$_{soll}$ berechnet.

In einem vierten Schritt S4 wird ein spätestes kurbelwellenwinkelbezogenes Soll-Haupteinspritzende SE_HE$_{mxsoll}$ ermittelt, indem vom Soll-Nacheinspritzbeginn SB_NE$_{soll}$ ein den Zeit- und/oder Kurbelwellenwinkelbedarf zum Wiederherstellen der Einspritzbereitschaft der Kraftstoffeinspritzvorrichtungen oder Injektoren der Dieselbrennkraftmaschine und weitere bekannte verzögernde Parameter umfassender Wert D_HE-NE subtrahiert wird.

In einem fünften Schritt S5 wird nun geprüft, ob das berechnete späteste Soll-Haupteinspritzende SE_HE$_{mxsoll}$ später liegt als ein sich additiv aus einem optimalen Wunsch-Haupteinspritzbeginn SB_HE$_{wunsch}$ und der Soll-Haupteinspritzdauer SD_HE$_{soll}$ ergebendes Wunsch- oder Soll-Einspritzende. Falls dies der Fall sein sollte, werden als Haupteinspritzbeginn SB_HE und als Haupteinspritzdauer SD_HE der optimale Wunsch-Haupteinspritzbeginn SB_HE$_{wunsch}$ bzw. die Soll-Haupteinspritzdauer SD_HE$_{soll}$ gewählt, während die entsprechenden Nacheinspritzparameter SB_NE und SD_NE gleich dem Soll-Nacheinspritzbeginn SB_NE$_{soll}$ bzw. SD_NE$_{soll}$ gewählt werden. Durch diese Wahl ist gewährleistet, daß das maximal späteste Nacheinspritzende SE_NE$_{mx}$ nicht überschritten und der gewünschte Lambdawert erreicht wird. Die Festlegung der Nacheinspritzparameter kann selbstverständlich auch bereits im Anschluß an Schritt S3 erfolgen. Durch diese Festlegung der Haupt- und Nacheinspritzdauer SD_HE bzw. SD_NE ist zwangsläufig auch das Haupt- und Nacheinspritzende SE_HE bzw. SE_NE eindeutig festgelegt.

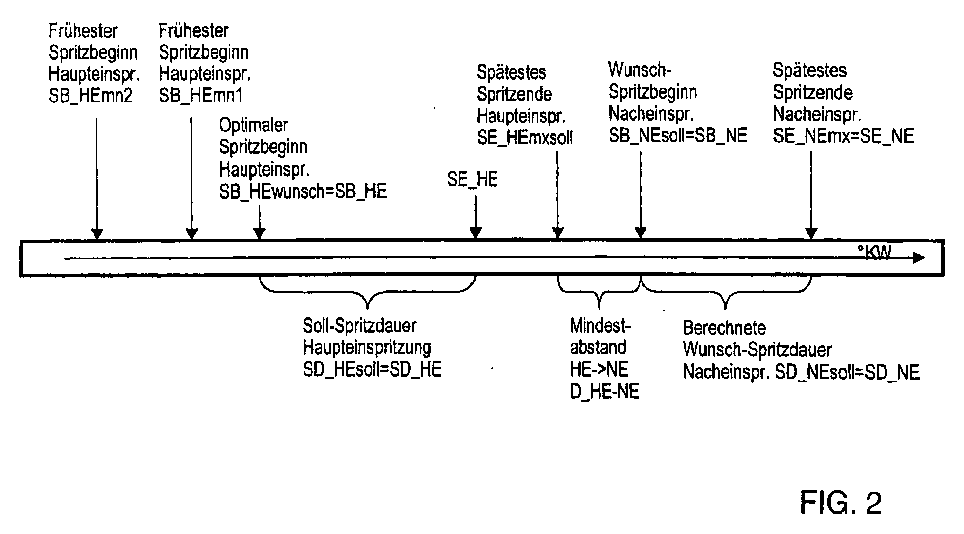

Zur Veranschaulichung dieser Situation ist in Fig. 2 noch einmal auf einer Zeitachse die zeitliche Lage der relevanten Haupt- und Nacheinspritzparameter dargestellt. Ganz rechts auf der Zeitachse liegt das maximal späteste Nacheinspritzende SE_NE$_{mx}$, das zur Festlegung des Nacheinspritzendes SE_NE verwendet wird und als Ausgangspunkt zur Bestimmung der übrigen Einspritzparameter dient, die naturgemäß zeitlich alle vor dem spätesten Nacheinspritzende SE_NE$_{mx}$ liegen und demgemäß auf der dargestellten Zeitachse bezüglich dieses Wertes alle entsprechend ihrem zeitlichen Abstand untereinander nach links verschoben sind. Die zeitlichen Abstände sind hierbei jeweils unterhalb der Zeitachse angegeben. Der zugehörige Nacheinspritzbeginn SB_NE ist somit in einem der Nacheinspritzdauer SD_NE entsprechenden Abstand bezüglich des spätesten Nacheinspritzendes SE_NE$_{mx}$ auf der Zeitachse aufgetragen, wobei diese Größen, wie bereits erwähnt wurde, erfindungsgemäß gleich dem Soll-Nacheinspritzbeginn SB_NE$_{soll}$ bzw. der ermittelten Soll-Nacheinspritzdauer SD_NE$_{soll}$ gewählt werden. Das maximal späteste Haupteinspritzende SE_HE$_{mxsoll}$ wird erfindungsgemäß wiederum so gewählt, daß Haupt- und Nacheinspritzung HE bzw. NE durch einen zeitlichen Mindestabstand D_HE-NE voneinander getrennt sind. Wenn dieses maximal späteste Haupteinspritzende SE_HE$_{mxsoll}$ später liegt als das sich aus den optimalen Wunsch-Haupteinspritzbeginn SB_HE$_{wunsch}$ und der Soll-Haupteinspritzdauer SD_HE$_{soll}$ ergebende Haupteinspritzende SE_HE ist gewährleistet, daß das maximal späteste Haupteinspritzende SE_HE$_{mxsoll}$ nicht überschritten wird, so daß der Spritzbeginn, die Spritzdauer und das Spritzende der Haupteinspritzung SB_HE, SD_HE und SE_HE erfindungsgemäß gleich dem entsprechenden eingezeichneten Wunsch- oder Soll-Haupteinspritzwerten gewählt werden. Links von dem optimalen Wunsch-Einspritzbeginn SB_HE$_{wunsch}$ sind noch ein zweiter und ein dritter festgelegter frühester Haupteinspritzbeginn SB_HE$_{mn1}$ bzw. SB_HE$_{mn2}$ eingezeichnet, deren Bedeutung für das erfindungsgemäße Verfahren nachstehend noch ausführlicher beschrieben wird.

Falls die Bedingung gemäß Schritt S5 nicht erfüllt ist, wird in einem sechsten Schritt S6 geprüft, ob bei Subtraktion der Soll-Haupteinspritzdauer SD_HE$_{soll}$ von dem maximal spätesten Soll-Haupteinspritzende SE_HE$_{mxsoll}$ der zweite vorgegebene früheste Haupteinspritzbeginn SB_HE$_{mn1}$ unterschritten wird, der durch die Einspritzdruckbereitstellung an den Einspritzvorrichtungen und/oder akustische Gründe und/oder weitere bekannte limitierende Parameter bestimmt ist. Wird der früheste Haupteinspritzbeginn SB_HE$_{mn1}$ nicht unterschritten, so wird der Haupteinspritzbeginn SB_HE gleich dem sich durch die Subtraktion ergebende Soll-Haupteinspritzbeginn gewählt. Auch die übrigen Haupt- und Nacheinspritzparameter SD_HE, SE_HE, SB_NE, SD_NE und SE_NE werden gleich ihren bereits erwähnten entsprechenden Soll-Werten gewählt. Auch durch diese Wahl der Einspritzparameter wird der gewünschte Lambdawert erreicht.

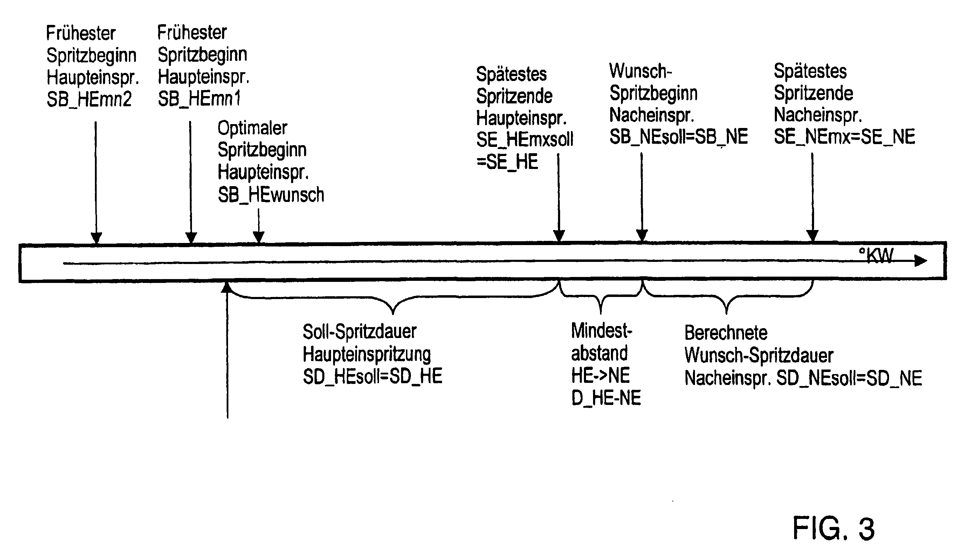

Diese Situation läßt sich am besten anhand von Fig. 3 veranschaulichen, in der wiederum die relevanten Einspritzparameter in einer zu Fig. 2 entsprechenden Darstellung aufgetragen sind. Im Unterschied zu Fig. 2 liegt im vorliegenden Fall, bei dem die an den Verzweigungsstellen S5 und S6 angegebenen Bedingungen jeweils nicht erfüllt sind, der Haupteinspritzbeginn SB_HE nach dem zweiten frühesten Haupteinspritzbeginn SB_HE$_{mn1}$ und vor dem

optimalen Wunsch-Haupteinspritzbeginn $SB\_HE_{wunsch}$, während das Haupteinspritzende $SE\_HE$ mit dem maximal spätesten Haupteinspritzende $SE\_HE_{mxsoll}$ übereinstimmt. Der zeitliche Abstand zwischen beiden Werten entspricht wiederum der Soll-Haupteinspritzdauer $SD\_HE_{soll}$. Da die Nacheinspritzparameter, wie bereits erwähnt wurde, mit ihren entsprechenden Soll-Werten übereinstimmen, entspricht der diese Parameter betreffende Teil der Darstellung der Darstellung gemäß Fig. 2.

Wird auch der erste früheste Haupteinspritzbeginn $SB\_HE_{mn1}$ unterschritten, so daß die Bedingung gemäß Schritt S6 erfüllt ist, so wird in einem siebten Schritt S7 durch Addition der Soll-Haupteinspritzdauer $SD\_HE_{soll}$ zu dem zweiten frühesten Haupteinspritzbeginn $SB\_HE_{mn1}$ ein erstes neues Haupteinspritzende $SE\_HE_{neu}$ berechnet, das später liegt als das für eine vollständige Nacheinspritzung erforderliche späteste Soll-Haupteinspritzende $SE\_HE_{soll}$.

Durch Addition des im vierten Schritt S4 berechneten Zeit-/Kurbelwellenwinkelintervalls $D\_HE\text{-}NE$ zu dem ersten neuen Haupteinspritzende $SE\_HE_{neu}$ wird nun in einem achten Schritte S8 ein erster neuer Nacheinspritzbeginn $SB\_NE_{mn}$ berechnet.

In einem neunten Schritt S9 wird anschließend durch Subtraktion des ersten neuen Nacheinspritzbeginns $SB\_NE_{mn}$ von dem maximal spätesten Nacheinspritzende $SE\_NE_{mx}$ eine erste realisierbare Nacheinspritzdauer $SD\_NE_{mn}$ bestimmt.

Da mit der der ersten realisierbaren Nacheinspritzdauer $SD\_NE_{mn}$ entsprechenden Nacheinspritzmenge der gewünschte Abgas-Lambdawert nicht erreichbar ist, wird in einem zehnten Schritt S10 die Differenz zwischen dem somit erreichbaren Abgas-Lambdawert und dem Wunsch- oder Soll-Lambdawert in eine verstärkte Androsselung, Anhebung der Abgasrückführungsrate und/oder Ladedrucksenkung umgerechnet. Bei der Umsetzung dieser Maßnahmen ist mit einer Momentenänderung, vorzugsweise eine Momentenminderung, zu rechnen, die durch eine Änderung, vorzugsweise Anhebung der Haupteinspritzmenge, d.h. eine Verlängerung der Haupteinspritzzeit $dSD\_HE$ kompensiert wird. Durch Addition dieser Haupteinspritzzeitänderung $dSD\_HE$ zu der Soll-Haupteinspritzdauer $SD\_HE_{soll}$ wird dann eine erste neue Haupteinspritzdauer $SD\_HE_{neu}$ berechnet.

In einem elften Schritt S11 wird nun durch Subtraktion der ersten neuen Haupteinspritzdauer $SD\_HE_{neu}$ von dem ersten neuen Haupteinspritzende $SE\_HE_{neu}$ der zugehörige erste neue Haupteinspritzbeginn $SB\_HE_{neu}$ bestimmt und überprüft, ob dieser Wert früher liegt als ein dritter frühester Haupteinspritzbeginn $SB\_HE_{mn2}$, der kurbelwellenwinkelbezogen vor dem zweiten frühesten Haupteinspritzbeginn $SB\_HE_{mn1}$ und vor dem Wunsch-Haupteinspritzbeginn $SB\_HE_{wunsch}$ liegt und eine harte, nicht unterschreitbare Grenze für den Haupteinspritzbeginn darstellt. Aus Applikationsgründen ist daher der zweite früheste Haupteinspritzbeginn $SB\_HE_{mn1}$ stetes in einem gewissen zeitlichen Abstand zum dritten frühesten Haupteinspritzbeginn $SB\_HE_{mn2}$ zu legen.

Bei Nichtunterschreitung des dritten frühesten Haupteinspritzbeginns $SB\_HE_{mn2}$ werden die Haupteinspritzparameter $SB\_HE$, $SD\_HE$ und/oder $SE\_HE$ gleich den entsprechenden ersten neuen Haupteinspritzparametern $SB\_HE_{neu}$, $SD\_HE_{neu}$ bzw. $SE\_HE_{neu}$ gewählt, während der Nacheinspritzbeginn und die Nacheinspritzdauer $SB\_NE$ bzw. $SD\_NE$ gleich dem ersten neuen Nacheinspritzbeginn $SB\_NE_{mn}$ bzw. gleich der ersten neuen Nacheinspritzdauer $SD\_NE_{mn}$ gewählt werden. Durch diese Festlegung stimmt das Nacheinspritzende $SE\_NE$ wiederum mit dem maximal spätesten Nacheinspritzende $SE\_NE_{mx}$ überein. Auch in diesem Fall wird der gewünschte Abgas-Lambdawert erreicht.

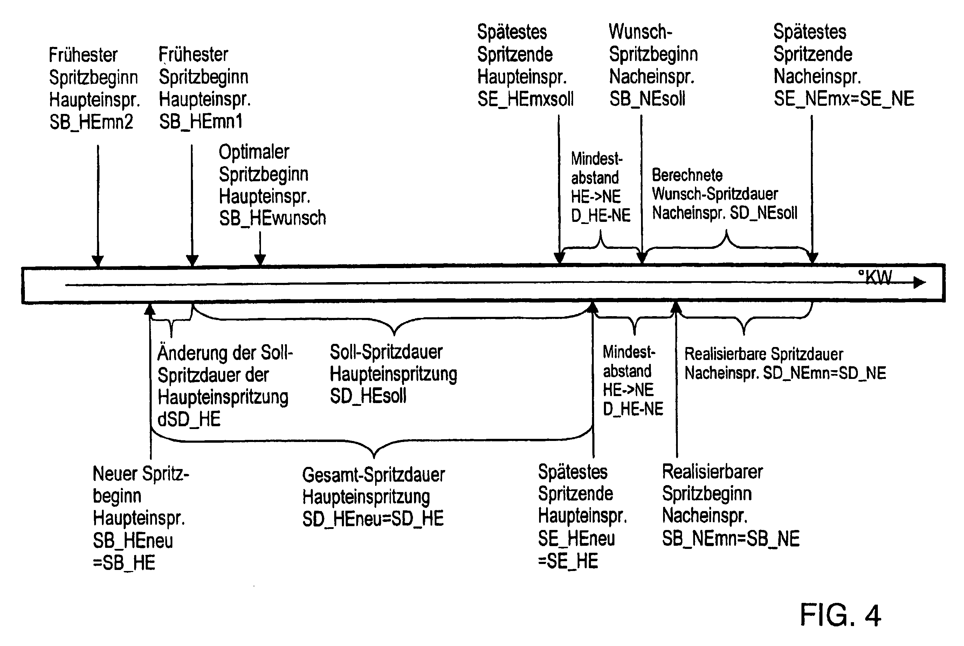

Diese erfindungsgemäße Wahl der Einspritzparameter ist zur Veranschaulichung noch einem in Fig. 4 dargestellt, die eine zu den Fig. 2 und 3 analoge Darstellung zeigt. Der dem ersten neue Haupteinspritzbeginn $SB\_HEneu$ entsprechende Haupteinspritzbeginn $SB\_HE$ liegt nun zwischen dem zweiten und dritten frühesten Haupteinspritzbeginn $SB\_HE_{mn1}$ bzw. $SB\_HE_{mn2}$, während das dem ersten neuen Haupteinspritzende $SE\_HE_{neu}$ entsprechende Haupteinspritzende $SE\_HE_{neu}$ zwischen dem maximal spätesten Haupteinspritzende $SE\_HE_{mxsoll}$ und dem Wunsch- oder Soll-Nacheinspritzbeginn $SB\_NE_{soll}$ liegt. Der zeitliche Abstand zwischen dem neuen Haupteinspritzbeginn $SB\_HE_{neu}$ und der neuen Haupteinspritzdauer $SD\_HE_{neu}$ entspricht der neuen Gesamteinspritzdauer $SD\_HE_{neu}$, die sich additiv aus der Soll-Haupteinspritzdauer $SD\_HE_{soll}$ und der berechneten Änderung der Soll-Haupteinspritzdauer $dSD\_HE$ zusammensetzt. Der realisierbare Nacheinspritzbeginn $SB\_NE = SB\_NE_{mn}$ liegt nun hinter dem Wunsch- oder Soll-Nacheinspritzbeginn $SB\_NE_{soll}$, wobei der zeitliche Abstand zu dem Haupteinspritzende $SE\_HE$ wiederum gleich dem zeitlichen Mindestabstand zwischen Haupt- und Nacheinspritzung $D\_HE\text{-}NE$ ist. Die realisierbare Nacheinspritzdauer $SD\_NE = SD\_NE_{mn}$ ist gleich dem zeitlichen Abstand zwischen dem maximal spätesten Nacheinspritzende $SE\_NE_{mx}$ und dem realisierbaren Nacheinspritzbeginn $SB\_NE_{mn}$.

Wird unwahrscheinlicherweise auch der dritte früheste Haupteinspritzbeginn $SB\_HE_{mn2}$ unterschritten, so wird in Verfahrensschritten S12 bis S14 ausgehend von dem dritten frühesten Haupteinspritzbeginn $SB\_HE_{mn2}$ in Analogie zu den Verfahrensschritten S7 bis S9 ein zweites neues Haupteinspritzende $SE\_HE_{neu2}$ (Schritt S12), ein zweiter neuer Nacheinspritzbeginn $SB\_NE_{mn2}$ (Schritt S13) und eine zweite neue Nacheinspritzdauer $SD\_NE_{mn2}$ (Schritt S14) berechnet. Die Haupteinspritzdauer $SD\_HE$ wird nun gleich der ersten neuen Haupteinspritzdauer $SD\_HE_{neu}$ gewählt, während der Haupteinspritzbeginn $SB\_HE$ und das Haupteinspritzende $SE\_HE$ gleich dem dritten neuen Haupteinspritzbeginn $SB\_HE_{mn2}$ bzw. dem zweiten neuen Haupteinspritzende $SE\_HE_{mn2}$ gewählt werden. Der Nacheinspritzbeginn $SB\_NE$ und die Nacheinspritzdauer $SD\_NE$ werden gleich dem zweiten neuen Nacheinspritzbeginn $SB\_NE_{mn2}$ bzw. der zweiten neuen Nacheinspritzdauer $SD\_NE_{mn2}$ gewählt. Auch in diesem Fall stimmt das Nacheinspritzende SE_NE wieder mit dem maximal spätesten Nacheinspritzende $SE\_NE_{mx}$ überein. Der gewünschte Lambdawert wird jedoch nicht erreicht, sondern lediglich ein Lambdawert, der bezüglich des Wunsch-Lambdawertes um einen möglichst geringen Betrag in Richtung "mager" verschoben ist.

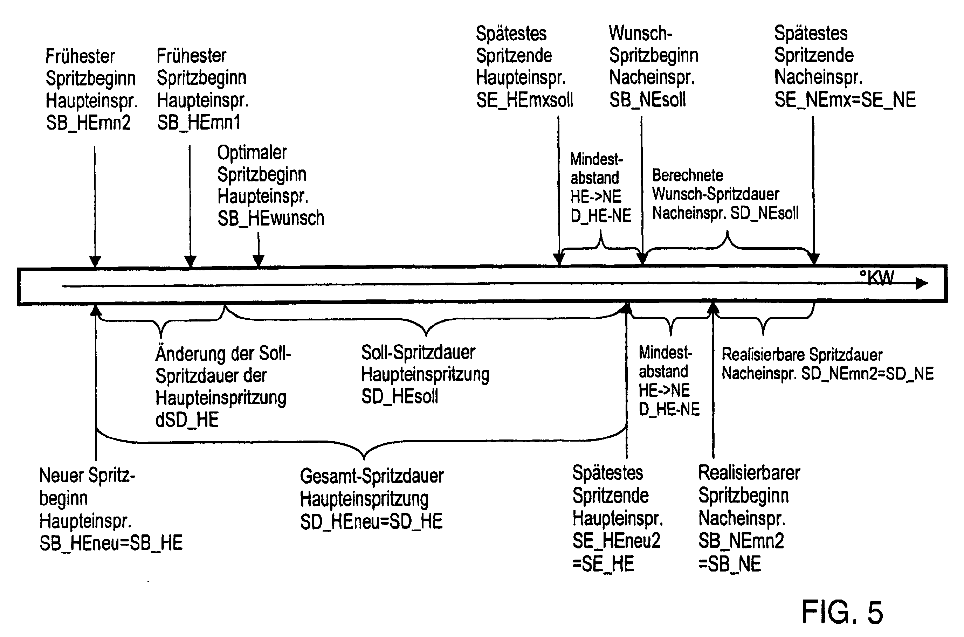

Diese Situation ist in Fig. 5 noch einmal anschaulich dargestellt. Der Haupteinspritzbeginn SB_HE entspricht nun dem nicht unterschreitbaren frühesten Haupteinspritzbeginn $SB\_HE_{mn2}$, während das dem zweiten neuen Haupteinspritzende $SE\_HE_{neu2}$ entsprechende Haupteinspritzende SE_HE wiederum hinter dem maximal spätesten Soll-Haupteinspritzende $SE\_HE_{mxsoll}$ liegt, wobei der Abstand zwischen Haupteinspritzende SE_HE und Haupteinspritzbeginn SB_HE durch die der ersten realisierbaren neuen Haupteinspritzdauer $SD\_HE_{neu}$ entsprechende Gesamt-Haupteinspritzdauer SD_HE bestimmt ist, die sich additiv aus der berechneten Änderung der Soll-Haupteinspritzdauer dSD_HE und der Soll-Haupteinspritzdauer $SD\_HE_{soll}$ ergibt. Der dem zweiten neuen Nacheinspritzbeginn $SB\_NE_{mn2}$ entsprechende realisierbare Nacheinspritzbeginn SB_NE liegt zeitlich in dem oben erwähnten Mindestabstand D_HE-NE hinter dem dem zweiten neuen Haupteinspritzende $SE\_HE_{neu2}$ entsprechenden spätesten Haupteinspritzende SE_HE. Die der zweiten neuen Nacheinspritzdauer $SD\_NE_{mn2}$ entsprechende realisierbare Nacheinspritzdauer SD_NE entspricht der Differenz zwischen dem maximal spätesten Nacheinspritzende $SE\_NE_{mx}$ und dem bei der vorliegenden Fahrsituation noch realisierbaren Nacheinspritzbeginn $SB\_NE_{mn2}$.

**Patentansprüche**

1. Verfahren zur Ermittlung von Einspritzparametern einer Dieselbrennkraftmaschine, wobei die Einspritzparameter in Abhängigkeit von einem maximal spätesten kurbelwellenwinkelbezogenen Nacheinspritzende $SE\_NE_{mx}$ und/ oder zumindest einem vorgegebenen Haupteinspritzbeginn so bestimmt werden, daß die Dieselbrennkraftmaschine in einem geforderten Last-Drehzahl-Betriebspunkt betreibbar ist oder betrieben wird **gekennzeichnet durch** folgende Verfahrensschritte:

> a. Bestimmung einer betriebspunktabhängigen kurbelwellenwinkelbezogenen Soll-Nacheinspritzdauer $SD\_NE_{soll}$;
> b. Berechnung des zugehörigen kurbelwellenwinkelbezogenen Soll-Nacheinspritzbeginns $SB\_NE_{soll}$ aus dem maximal spätesten Nacheinspritzende $SE\_NE_{mx}$ und der Soll-Nacheinspritzdauer $SD\_NE_{soll}$ gemäß:

$$SB\_NE_{soll} = SE\_NE_{mx} - SD\_NE_{soll};$$

> und
> c. Festlegung des Nacheinspritzbeginns SB_NE, der Nacheinspritzdauer SD_NE und/oder des Nacheinspritzendes SE_NE gemäß:

$$SB\_NE = SB\_NE_{soll},$$

$$SD\_NE = SD\_NE_{soll},$$

> und

$$SE\_NE = SE\_NE_{mx};$$

> d. Berechnung eines spätesten kurbelwellenwinkelbezogenen Soll-Haupteinspritzendes $SE\_HE_{mxsoll}$ aus dem Soll-Nacheinspritzbeginn $SB\_NE_{soll}$ und einem den Zeit- und/oder Kurbelwellenwinkelbedarf zum Wiederherstellen der Einspritzbereitschaft der Kraftstoffeinspritzvorrichtungen der Dieselbrennkraftmaschine und weitere Verzögerungsparameter umfassenden Wert D_HE-NE gemäß:

$$SE\_HE_{mx}soll = SB\_NE_{soll} - D\_HE\text{-}NE;$$

e. Berechnung des zugehörigen spätesten kurbelwellenwinkelbezogenen Soll-Haupteinspritzbeginns SB_$HE_{mxsoll}$ aus dem spätesten Soll-Haupteinspritzende SE_$HE_{mxsoll}$ und einer betriebspunktabhängig vorgegebenen kurbelwellenwinkelbezogenen Soll-Haupteinspritzdauer SD_$HE_{soll}$ gemäß:

$$SB\_HE_{mxsoll} = SE\_HE_{mxsoll} - SD\_HE_{soll}$$

und/oder
Berechnung eines vorgegebenen kurbelwellenwinkelbezogenen Soll-Haupteinspritzendes SE_$HE_{soll}$ aus einem ersten vorgegebenen kurbelwellenwinkelbezogenen Soll-Haupteinspritzbeginn SB_$HE_{soll}$ und der betriebspunktmäßig vorgegebenen Soll-Haupteinspritzdauer SD_$HE_{soll}$ gemäß:

$$SE\_HE_{soll} = SB\_HE_{soll} + SD\_HE_{soll};$$

f. Vergleich des spätesten Soll-Haupteinspritzendes SE_$HE_{mxsoll}$ mit dem vorgegebenen Soll-Haupteinspritzende SE_$HE_{soll}$ oder Vergleich des spätesten Soll-Haupteinspritzbeginns SB_$HE_{mxsoll}$ mit dem ersten vorgegebenen Soll-Haupteinspritzbeginn SB_$HE_{soll}$ und Festlegung des einzustellenden Haupteinspritzbeginns SB_HE, der einzustellenden Haupteinspritzdauer SD_HE und/oder des einzustellenden Haupteinspritzendes SE_HE gemäß:

$$SB\_HE = SB\_HE_{soll},$$

$$SD\_HE = SD\_HE_{soll},$$

und

$$SE\_HE = SE\_HE_{soll}$$

falls

$$SE\_HE_{mxsoll} \geq SE\_HE_{soll} \text{ bzw.}$$

$$SB\_HE_{mxsoll} \geq SB\_HE_{soll}$$

ansonsten Ermittlung der Haupt- und/oder Nacheinspritzparameter SB_HE, SD_HE und/oder SE_HE bzw. SB_NE, SD_NE und/oder SE_NE in Abhängigkeit von zumindest einem weiteren vorgegebenen Haupteinspritzbeginn.

2. Verfahren nach Anspruch 1, **dadurch gekennzeichnet, dass** als erster vorgegebener Soll-Haupteinspritzbeginn SB_$HE_{soll}$ ein optimaler Wunsch-Haupteinspritzbeginn SB_$HE_{wunsch}$ verwendet wird.

3. Verfahren nach Anspruch 1 oder 2, **gekennzeichnet durch** den zusätzlichen Verfahrensschritt:

g. Vergleich des spätesten Soll-Haupteinspritzbeginns SB_$HE_{mxsoxll}$ mit einem vor dem ersten vorgegebenen Soll-Haupteinspritzbeginn SB_$HE_{soll}$ liegenden zweiten vorgegebenen Haupteinspritzbeginn SB_$He_{mn1}$ und Festlegung des Haupteinspritzbeginns SB_HE, der Haupteinspritzdauer SD_HE und/oder des Haupteinspritzendes SE_HE gemäß:

$$SB\_HE = SB\_HEmxsoll,$$

$$SD\_HE = SD\_HEsoll,$$

und

$$SE\_HE = SE\_HEmxsoll$$

falls

$$SB\_HE_{mxsoll} \geq SB\_HE_{mn1}$$

ansonsten Ermittlung der Haupt- und Nacheinspritzparameter SB_HE, SD_HE bzw. SE_HE, SB_NE und SD_NE bzw. SE_NE in Abhängigkeit von dem zweiten und/oder zumindest einem weiteren vorgegebenen Haupteinspritzbeginn.

4. Verfahren nach Anspruch 3, **dadurch gekennzeichnet, dass** als zweiter vorgegebener Haupteinspritzbeginn $SB\_HE_{mn1}$ ein festgelegter frühester Haupteinspritzbeginn verwendet wird, der durch die Einspritzdruckbereitstellung der Kraftstoffeinspritzvorrichtungen der Dieselbrennkraftmaschine und/oder akustische Gründe und/oder weitere bekannte limitierende Parameter bestimmt ist.

5. Verfahren nach Anspruch 3 oder 4 **gekennzeichnet durch** die zusätzlichen Verfahrensschritte:

h. Berechnung eines ersten neuen Haupteinspritzendes $SE\_HE_{neu}$ aus der ermittelten Soll-Haupteinspritzdauer $SD\_HE_{soll}$ und dem zweiten vorgegebenen Haupteinspritzbeginn $SB\_HE_{mn1}$ gemäß:

$$SE\_HE_{neu} = SB\_HE_{mn1} + SD\_HE_{soll};$$

i. Berechnung eines ersten neuen Nacheinspritzbeginns $SB\_NE_{mn}$ aus dem ersten neuen Haupteinspritzende $SE\_HE_{neu}$ und dem Wert D_HE-NE gemäß:

$$SB\_NE_{mn} = SE\_HE_{neu} + D\_HE\text{-}NE;$$

j. Berechnung einer realisierbaren ersten neuen Nacheinspritzdauer $SD\_NE_{mn}$ aus dem ersten neuen Nacheinspritzbeginn $SB\_NE_{mn}$ und dem maximal spätesten Nacheinspritzende $SE\_NE_{mn}$ gemäß:

$$SD\_NE_{mn} = SE\_NE_{mx} - SB\_NE_{mn};$$

k. Umrechnung der Differenz zwischen dem sich mit den neuen Nacheinspritzparametern $SB\_NE_{mn}$ und $SD\_NE_{mn}$ ergebenden Lambda-Wert und einem Wunsch-Lambdawert in eine verstärkte Androsselung und/oder Änderung der Abgasrückführungsrate und/oder Ladedruckänderung; Kompensation einer sich bei der Umsetzung dieser Maßnahmen ergebenden Momentenänderung durch eine Änderung der Haupteinspritzdauer d SD_HE und Berechnung einer ersten neuen Haupteinspritzdauer $SD\_HE_{neu}$ aus der betriebspunktabhängigen

Soll-Haupteinspritzdauer $SD\_HE_{soll}$ und der Änderung der Haupteinspritzdauer d $SD\_HE$ gemäß:

$$SD\_HE_{neu} = SD\_HE_{soll} + d\ SD\_HE;$$

l. Berechnung des zugehörigen ersten neuen Haupteinspritzbeginns $SB\_HE_{neu}$ aus der ersten neuen Haupteinspritzdauer $SD\_HE_{neu}$ und dem ersten neuen Haupteinspritzende $SE\_HE_{neu}$ gemäß:

$$SB\_HE_{neu} = SE\_HE_{neu} - SD\_HE_{neu};$$

und
m. Vergleich dieses ersten neuen Haupteinspritzbeginns $SB\_HE_{neu}$ mit einem nicht unterschreitbaren, maximal frühesten dritten Haupteinspritzbeginn $SB\_HE_{mn2}$ und Festlegung der Einspritzparameter gemäß:

$$SB\_HE = SB\_HEneu;$$

$$SD\_HE = SD\_HEneu;$$

$$SE\_HE = SE\_HEneu;$$

$$SB\_NE = SB\_NEmn;$$

$$SD\_NE = SD\_NEmn$$

und

$$SE\_NE = SE\_NEmx$$

falls

$$SB\_HE_{neu} \geq SB\_HE_{mn2},$$

ansonsten Ermittlung der Haupt- und Nacheinspritzparameter in Abhängigkeit von den maximal frühesten dritten Haupteinspritzbeginn $SB\_HE_{mn2}$ und der ersten neuen Haupteinspritzdauer $SD\_HE_{neu}$.

6. Verfahren nach Anspruch 5, **dadurch gekennzeichnet, dass** als dritter vorgegebener Haupteinspritzbeginn $SB\_HE_{mn2}$ ein kurbelwellenwinkelbezogen in einem bestimmten Abstand vor dem zweiten vorgegebenen Haupteinspritzbeginn $SB\_HEmn1$ liegender, nicht unterschreitbarer maximal frühester Haupteinspritzbeginn verwendet wird.

7. Verfahren nach einem der Ansprüche 1 bis 6, **dadurch gekennzeichnet, dass** im geforderten Last-Drehzahl-Betriebspunkt gegebenenfalls mit Unterstützung durch eine Saugluft-Androsselung und/oder Ladedruckänderung und/oder Änderung der Abgasrückführungsrate ein geforderter Wunsch-Lambdawert eingehalten wird.

8. Verfahren nach Anspruch 6 oder 7, **gekennzeichnet durch** die zusätzlichen Verfahrensschritte:

n. Berechnung eines zweiten neuen Haupteinspritzendes $SE\_HE_{neu2}$ aus der ersten neuen Haupteinspritzdauer $SD\_HE_{neu}$ und dem dritten vorgegebenen Haupteinspritzbeginn $SB\_HE_{mn2}$ gemäß:

$$SE\_HE_{neu2} = SB\_HE_{mn2} + SD\_HE_{neu};$$

o. Berechnung eines zweiten neuen Nacheinspritzbeginns $SB\_NE_{mn2}$ aus dem zweiten neuen Haupteinspritzende $SE\_HE_{neu2}$ und dem Wert D_HE-NE gemäß:

$$SB\_NE_{mn2} = SE\_HE_{neu2} + D\_HE\text{-}NE;$$

p. Berechnung einer realisierbaren zweiten neuen Nacheinspritzdauer $SD\_NE_{mn2}$ aus dem zweiten neuen Nacheinspritzbeginn $SB\_NE_{mn2}$ und dem maximal spätesten Nacheinspritzende $SE\_NE_{mx}$ gemäß:

$$SD\_NE_{mn2} = SE\_NE_{mx} - SB\_NE_{mn2};$$

und
q. Festlegung der Einspritzparameter gemäß:

$$SB\_HE = SB\_HEmn2;$$

$$SD\_HE = SD\_HEneu;$$

$$SE\_HE = SE\_HEneu2;$$

$$SB\_NE = SB\_NEmn2;$$

$$SD\_NE = SD\_NEmn2.$$

und

$$SE\_NE = SE\_NE_{mx}.$$

**9.** Verfahren nach Anspruch 8, **dadurch gekennzeichnet, dass** im geforderten Last-Drehzahl-Betriebspunkt gegebenenfalls mit Unterstützung durch eine Saugluft-Androsselung und/oder Ladedruckänderung und/oder Änderung der Abgasrückführungsrate ein Lambda-Wert eingehalten wird, der um einen möglichst geringen Betrag von einem geforderten Wunsch-Lambdawert aus in Richtung "mager" verschoben ist.

**Claims**

**1.** Method for determining injection parameters of a diesel internal combustion engine, the injection parameters being determined as a function of an absolutely latest crankshaft angle-related end $SE\_NE_{mx}$ of post injection and/or at least one predefined start of main injection in such a way that the diesel internal combustion engine can be operated or is operated at a requested load/rotational speed operating point, **characterized by** the following method steps:

a. determination of an operating point-dependent crankshaft angle-related set point post injection period SO_NE$_{soll}$,

b. calculation of the associated crankshaft angle-related set point start SB_NE$_{soll}$ of post injection from the absolutely latest end SE_NE$_{mx}$ of post injection and the set point period SD_NE$_{soll}$ of post injection according to:

$$SB\_NE_{soll} = SE\_NE_{mx} - SD\_NE_{soll}$$

and

c. determination of the start SB_NE of post injection, of the period SD_NE of post injection and/or of the end SE_NE of post injection according to:

$$SB\_NE = SB\_NE_{soll},$$

$$SD\_NE = SD\_NE_{soll},$$

and

$$SE\_NE = SE\_NE_{mx};$$

d. calculation of a latest crankshaft angle-related set point end SE_HE$_{mxsoll}$ of main injection from the set point start SB_NE$_{soll}$ of post injection and a value D_HE-NE which includes the time and/or crankshaft angle requirement for restoring the readiness of the fuel injection devices of the diesel internal combustion engine to inject and further delay parameters according to:

$$SE\_HE_{mx}soll = SB\_NE_{soll} - D\_HE-NE;$$

e. calculation of the associated latest crankshaft angle-related set point start SB_HE$_{mxsoll}$ of main injection from the latest set point end SE_HE$_{mxsoll}$ of main injection and a crankshaft angle-related set point period SD_HE$_{soll}$ of main injection which is predefined as a function of the operating point, according to:

$$SB\_HE_{mxsoll} = SE\_HE_{mxsoll} - SD\_HE_{soll}$$

and/or

calculation of a predefined crankshaft angle-related set point end SE _HE$_{soll}$ of main injection from a first predefined crankshaft angle-related set point start SB_HE$_{soll}$ of main injection and the set point period SD_HE$_{soll}$ of main injection which is predefined as a function of the operating point, according to:

$$SE\_HE_{soll} = SB\_HE_{soll} + SD\_HE_{soll};$$

f. comparison of the latest set point end SE_HE$_{mxsoll}$ of main injection with the predefined set point end SE_HE$_{soll}$ of main injection or comparison of the latest set point start SB_HE$_{mxsoll}$ of main injection with the first predefined set point start SB_HE$_{soll}$ of main injection and definition of the start SB_HE of the main injection which is to be set, the period SD_HE of main injection which is to be set and/or the end SE_HE of main injection which is to be set, according to:

$$SB\_HE = SB\_HE_{soll},$$

$$SD\_HE = SD\_HE_{soll},$$

and

$$SE\_HE = SE\_HE_{soll}$$

if

$$SE\_HE_{mxsoll} \geq SE\_HE_{soll}$$

or

$$SB\_HE_{mxsoll} \geq SB\_HE_{soll}$$

otherwise determination of the main injection parameter and/or post injection parameter SB_HE, SD_HE and/or SE_HE or SB_NE, SD_NE and/or SE_NE as a function of at least one further predefined start of main injection.

2. Method according to Claim 1, **characterized in that** an optimum request for the start of main injection $SB\_HE_{wunsch}$ is used as the first predefined set point start $SB\_HE_{soll}$ of the main injection.

3. Method according to Claim 1 or 2, **characterized by** the additional method step:

g. comparison of the latest start $SB\_HE_{mxsoll}$ of main injection with a second predefined start $SB\_HE_{min1}$ of main injection before the first predefined set point start $SB\_HE_{soll}$ of main injection, and definition of the start SB_HE of main injection, the period SD_HE of main injection and/or the end SE_HE of main injection, according to:

$$SB\_HE = SB\_HE_{mxsoll},$$

$$SD\_HE = SD\_HE_{soll},$$

and

$$SE\_HE = SE\_HE_{mxsoll}$$

if

$$SB\_HE_{mxsoll} \geq SB\_HE_{min1}$$

otherwise determination of the main and post injection parameters SB_HE, SD_HE or SE_HE, SB_NE and SD_NE or SE_NE as a function of the second and/or at least a further predefined start of main injection.

4. Method according to Claim 3, **characterized in that** a defined, earliest start of main injection is used as a second predefined start $SB\_HE_{min1}$ of main injection, said earliest start of main injection being determined by the provision of injection pressure by the fuel injection devices of the diesel internal combustion engine and/or auditory reasons and/or further known limiting parameters.

5. Method according to Claim 3 or 4, **characterized by** the additional method steps:

> h. calculation of a first new end $SE\_HE_{neu}$ of main injection from the determined set point period $SD\_HE_{soll}$ of main injection and the second predefined start $SB\_HE_{min1}$ of main injection, according to:

$$SE\_HE_{neu} = SB\_HE_{min1} + SD\_HE_{soll};$$

> i. calculation of a first new start $SB\_NE_{mn}$ of post injection from the first new end $SE\_HE_{neu}$ of main injection and the value D_HE-NE, according to:

$$SB\_NE_{mn} = SE\_HE_{neu} + D\_HE\text{-}NE;$$

> j. calculation of an implementable, first new period $SD\_NE_{mn}$ of post injection from the first new start $SB\_NE_{mn}$ of post injection and the absolutely latest end $SE\_NE_{mn}$ of post injection, according to:

$$SD\_NE_{mn} = SE\_NE_{mx} - SB\_NE_{mn};$$

> k. conversion of the difference between the lambda value which is obtained with the new post injection parameters $SB\_NE_{mn}$ and $SD\_NE_{mn}$ and a requested lambda value into increased throttling and/or modification of the exhaust gas recirculation rate and/or change in charge pressure; compensation of a change in torque which occurs during the conversion of these measures, by changing the main injection period d SD_HE and calculating a first new period $SD\_HE_{neu}$ of main injection from the operating point-dependent set point period $SD\_HE_{soll}$ of main injection and the change in the period d SD_HE of main injection, according to:

$$SD\_HE_{neu} = SD\_HE_{soll} + d\ SD\_HE;$$

> l. calculation of the associated first new start $SB\_HE_{neu}$ of main injection from the first new period $SD\_HE_{neu}$ of main injection and the first new end $SE\_HE_{neu}$ of main injection, according to:

$$SB\_HE_{neu} = SE\_HE_{neu} - SD\_HE_{neu};$$

> and
> m. comparison of this first new start $SB\_HE_{neu}$ of main injection with an absolutely earliest third start $SB\_HE_{mn2}$ of the main injection which cannot be undershot, and definition of the injection parameters according to:

$$SB\_HE = SB\_HEneu;$$

$$SD\_HE = SD\_HEneu;$$

$$SE\_HE = SE\_HEneu;$$

$$SB\_NE = SB\_NEmn;$$

$$SD\_NE = SD\_NEmn$$

and

$$SE\_NE = SE\_NEmx$$

if

$$SB\_HE_{neu} \geq SB\_HE_{mn2},$$

otherwise determination of the main and post injection parameters as a function of the absolutely earliest third start $SB\_HE_{mn2}$ of main injection and the first new period $SD\_HE_{neu}$ of main injection.

6. Method according to.Claim 5, **characterized in that** a crankshaft angle-related absolutely earliest start of main injection which occurs a specific time before the second predefined start $SB\_HE_{mn1}$ of the main injection and which cannot be undershot is used as the third predefined start $SB\_HE_{mn2}$ of main injection.

7. Method according to one of Claims 1 to 6, **characterized in that** a requested request lambda value is maintained at the requested load/rotational speed operating point, if appropriate with support from intake air throttling and/or charge air modification and/or modification of the exhaust gas recirculation rate.

8. Method according to Claim 6 or 7, **characterized by** the additional method steps:

n. calculation of a second new end $SE\_HE_{neu2}$ of main injection from the first new period $SD\_HE_{neu}$ of main injection and the third predefined start $SB\_HE_{mn2}$ of main injection, according to:

$$SE\_HE_{neu2} = SB\_HE_{mn2} + SD\_HE_{neu},$$

o. calculation of a second new start $SB\_NE_{mn2}$ of post injection from the second new end $SE\_HE_{neu2}$ of main injection and the value D_HE-NE, according to:

$$SB\_NE_{mn2} = SE\_HE_{neu2} + D\_HE-NE;$$

p. calculation of an implementable second new period $SD\_NE_{mn2}$ of post injection from the second new start $SB\_NE_{mn2}$ of post injection and the absolutely latest end $SE\_NE_{mx}$ of post injection, according to:

$$SB\_NE_{mn2} = SE\_NE_{mx} - SB\_NE_{mn2},$$

and
q. definition of the injection parameters according to:

$$SB\_HE = SB\_HEmn2;$$

$$SD\_HE = SD\_HEneu;$$

$$SE\_HE = SE\_HEneu2;$$

$$SB\_NE = SB\_NEmn2;$$

$$SD\_NE = SD\_NEmn2$$

and

$$SE\_NE = SE\_NE_{mx}.$$

**9.** Method according to Claim 8, **characterized in that** a lambda value which is displaced by an absolute value which is as small as possible from a requested request lambda value in the direction of "lean" is maintained at the requested load/rotational speed operating point, if appropriate with support by intake air throttling and/or charge air modification and/or modification of the exhaust gas recirculation rate.

**Revendications**

**1.** Procédé de détermination des paramètres d'injection d'un moteur à combustion interne à allumage spontané, dans lequel les paramètres d'injection sont déterminés, en fonction d'une fin de post-injection $SE\_NE_{mx}$ la plus tardive possible par rapport à l'angle de vilebrequin et/ou au moins un début prédéterminé d'injection principale, de manière telle que le moteur à combustion interne à allumage spontané puisse fonctionner ou fonctionne en un point de fonctionnement charge-régime demandé, **caractérisé par** les étapes de procédé suivantes :

a. détermination d'une consigne de durée de post-injection $SD\_NE_{soll}$ par rapport à l'angle de vilebrequin et en fonction du point de fonctionnement ;
b. calcul de la consigne du début de post-injection $SB\_NE_{soll}$ par rapport à l'angle de vilebrequin correspondant à partir de la fin de post-injection $SE\_NE_{mx}$ la plus tardive et la consigne de durée de post-injection $SD\_NE_{soll}$ selon :

$$SB\_NE_{soll} = SE\_NE_{mx} - SD\_NE_{soll} ;$$

et
c. définition du début de post-injection SB_NE, de la durée de post-injection SD_NE et/ou de la fin de post-injection SE_NE selon :

$$SB\_NE = SB\_NE_{soll},$$

$$SD\_NE = SD\_NE_{soll}$$

et

$$SE\_NE = SE\_NE_{mx} \; ;$$

d. calcul d'une consigne de fin d'injection principale $SE\_HE_{mxsoll}$ la plus tardive par rapport à l'angle de vilebrequin, à partir de la consigne de début de post-injection $SB\_NE_{soll}$ et d'une autre valeur $D\_HE\text{-}NE$ comprenant le besoin en temps et/ou en degrés de vilebrequin pour établir à nouveau la possibilité d'injection des équipements d'injection de carburant du moteur à combustion interne à allumage spontané et d'autres paramètres de retardement selon :

$$SE\_HE_{mx}soll = SB\_NE_{soll} - D\_HE\text{-}NE \; ;$$

e. calcul de la consigne correspondante de début d'injection principale $SB\_HE_{mxsoll}$ le plus tardif par rapport à l'angle de vilebrequin à partir de la consigne de la fin d'injection principale la plus tardive $SE\_HE_{mxsoll}$ et d'une consigne de durée d'injection principale $SD\_HE_{soll}$ prédéterminée en fonction du point de fonctionnement et par rapport à l'angle de vilebrequin selon :

$$SB\_HE_{mxsoll} = SE\_HE_{mxsoll} - SD\_HE_{soll} \; ;$$

et/ou
calcul d'une consigne de fin d'injection principale $SE\_HE_{soll}$ prédéterminée par rapport à l'angle de vilebrequin à partir d'une première consigne de début d'injection principale $SB\_HE_{soll}$ prédéterminée par rapport à l'angle de vilebrequin et de la consigne de durée d'injection principale $SD\_HE_{soll}$ prédéterminée en fonction du point de fonctionnement, selon :

$$SE\_HE_{soll} = SB\_HE_{soll} + SD\_HE_{soll} \; ;$$

f. comparaison de la consigne de fin d'injection principale la plus tardive $SE\_HE_{mxsoll}$ avec la consigne de fin d'injection principale prédéterminée $SE\_HE_{soll}$ ou comparaison de la consigne de début d'injection principale le plus tardif $SB\_HE_{mxsoll}$ et la première consigne de début d'injection principale prédéterminée $SB\_HE_{soll}$ et définition du début d'injection principale $SB\_HE$ à régler, de la durée d'injection principale $SD\_HE$ à régler et/ou de la fin d'injection principale $SE\_HE$ à régler selon :

$$SB\_HE = SB\_HE_{soll} \, ,$$

$$SD\_HE = SD\_HE_{soll}$$

et

$$SE\_HE = SE\_HE_{soll}$$

dans le cas où

$$SE\_HE_{mxsoll} >= SE\_HE_{soll}$$

respectivement,

$$SB\_HE_{mxsoll} >= SB\_HE_{soll}$$

sinon, détermination des paramètres d'injection principale et/ou de post-injection SB_HE, SD_HE et/ou SE_ HE resp. SB_NE, SD_NE et/ou SE_NE en fonction d'au moins un autre début d'injection principale prédéterminé.

2. Procédé suivant la revendication 1 **caractérisé en ce qu'**un début souhaité optimal d'injection principale SB_ HE$_{wunsch}$ est utilisé comme première consigne de début d'injection principale prédéterminé SB_HE$_{soll}$.

3. Procédé suivant la revendication 1 ou 2, **caractérisé par** l'étape supplémentaire de procédé :

g. comparaison de la consigne du début d'injection principale le plus tardif SB_HE$_{mxsoll}$ avec un deuxième début d'injection principale SB_HE$_{mn1}$ situé avant le premier début d'injection principale prédéterminé SB_HE$_{soll}$ et définition du début d'injection principale SB_HE, de la durée d'injection principale SD_HE et/ou de la fin d'injection principale SE_HE selon :

$$SB\_HE = SB\_HE_{mxsoll},$$

$$SE\_HE = SD\_HE_{soll},$$

et

$$SE\_HE = SE\_HE_{mxsoll},$$

dans le cas où

$$SB\_HE_{mxsoll} >= SB\_HE_{mn1} ,$$

sinon, détermination des paramètres d'injection principale et de post-injection SB_HE, SD_HE resp. SE_HE, SB_NE et SD_NE resp. SE_NE en fonction du deuxième début d'injection principale et/ou d'au moins un autre début d'injection principale prédéterminé.

4. Procédé suivant la revendication 3, **caractérisé en ce qu'**en tant que deuxième début d'injection principale prédéterminé SB_HE$_{mn1}$, on utilise un certain début d'injection principale le plus précoce possible, lequel est déterminé par la génération de la pression d'injection des équipements d'injection de carburant du moteur à combustion interne à allumage spontané et/ou par des raisons acoustiques et/ou par d'autres paramètres limitatifs connus.

5. Procédé suivant la revendication 3 ou 4, **caractérisé par** les étapes supplémentaires de procédé :

h. calcul d'une première nouvelle fin d'injection principale SE_HE$_{neu}$ à partir de la consigne déterminée de durée d'injection principale SD_HE$_{soll}$ et le deuxième début d'injection principale prédéterminé SB_HE$_{mn1}$ selon :

$$SE\_HE_{neu} = SB\_HE_{mn1} + SD\_HE_{soll}$$

i. calcul d'un premier nouveau début de post-injection $SB\_NE_{mn}$ à partir de la première nouvelle fin d'injection principale $SE\_HE_{neu}$ et la valeur D_HE-NE selon :

$$SB\_NE_{mn} \ = \ SE\_HE_{neu} \ + \ D\_HE\!-\!NE \ ;$$

j. calcul d'une première nouvelle durée de post-injection $SD\_NE_{mn}$ réalisable à partir du premier nouveau début de post-injection $SB\_NE_{nm}$ et la fin de post-injection la plus tardive possible $SE\_NE_{mn}$ selon :

$$SD\_NE_{mn} \ = \ SE\_NE_{mx} \ - \ SB\_NE_{mn} \ ;$$

k. conversion de la différence entre la valeur lambda découlant des nouveaux paramètres de post-injection $SB\_NE_{mn}$ et $SD\_NE_{mn}$ et une valeur lambda souhaitée dans un étranglement renforcé et/ou une modification du taux de recyclage des gaz d'échappement et/ou d'une modification de la pression de suralimentation ; compensation d'une modification de couple se produisant lors de la transposition de ces mesures, suite à une modification de la durée d'injection principale d SD_HE et calcul d'une première nouvelle durée d'injection principale $SD\_HE_{neu}$ à partir de la consigne de la durée d'injection principale $SD\_HE_{soll}$ en fonction du point de fonctionnement et à partir de la modification de la durée d'injection principale d SD_HE selon :

$$SD\_HE_{neu} \ = \ SD\_HE_{soll} \ + \ d \ SD\_HE \ ;$$

l. calcul du premier nouveau début d'injection principale $SB\_HE_{neu}$ correspondant à partir de la première nouvelle durée d'injection principale SD-$HE_{neu}$ et la première nouvelle fin d'injection principale $SE\_HE_{neu}$ selon :

$$SB\_HE_{neu} \ = \ SE\_HE_{neu} \ - \ SD\_HE_{neu}$$

et

m. comparaison de ce premier nouveau début d'injection principale $SB\_HE_{neu}$ avec un troisième début d'injection principale $SB\_HE_{mn2}$ le plus précoce possible et au-dessous duquel on ne peut descendre et définition des paramètres d'injection selon :

$$SB\_HE \ = \ SB\_HE_{neu} \ ;$$

$$SD\_HE \ = \ SD\_HE_{neu} \ ;$$

$$SE\_HE \ = \ SE\_HE_{neu} \ ;$$

$$SB\_NE \ = \ SB\_NE_{mn} \ ;$$

$$SD\_NE \ = \ SD\_NE_{mn}$$

et

$$SE\_NE \ = \ SE\_NE_{mx}$$

dans le cas où

$$SB\_HE_{neu} >= SB\_HE_{mn2},$$

sinon détermination des paramètres d'injection principale et de post-injection en fonction du troisième début d'injection principale $SB\_HE_{mn2}$ le plus précoce et de la première nouvelle durée d'injection principale $SD\_HE_{neu}$.

6. Procédé suivant la revendication 5, **caractérisé en ce qu'**un début d'injection principale le plus précoce possible, au-dessous duquel on ne peut descendre et situé à un certain intervalle avant le deuxième début d'injection principale prédéterminé $SB\_HE_{mn1}$ par rapport à l'angle de vilebrequin est utilisé en tant que début d'injection principale $SB\_HE_{mn2}$ prédéterminé.

7. Procédé selon l'une quelconque des revendication 1 à 6, **caractérisé en ce qu'**au point de fonctionnement charge-régime demandé, une valeur lambda souhaitée et demandée est maintenue, le cas échéant, à l'aide d'un étranglement de l'air d'admission et/ou une modification de la pression de suralimentation et/ou une modification du taux de recyclage des gaz d'échappement.

8. Procédé suivant la revendication 6 ou 7, **caractérisé par** les étapes supplémentaires de procédé :

n. calcul d'une deuxième nouvelle fin d'injection principale $SE\_HE_{neu2}$ à partir de la première nouvelle durée d'injection principale $SD\_HE_{neu}$ et le troisième début d'injection principale prédéterminé $SB\_HE_{mn2}$ selon :

$$SE\_HE_{neu2} = SB\_HE_{mn2} + SD\_HE_{neu} ;$$

o. calcul d'un deuxième nouveau début de post-injection $SB\_NE_{mn2}$ à partir de la deuxième nouvelle fin d'injection principale $SE\_HE_{neu2}$ et la valeur D_HE-NE selon :

$$SB\_NE_{mn2} = SE\_HE_{neu2} + D\_HE-NE ;$$

p. calcul d'une deuxième nouvelle durée de post-injection $SD\_NE_{mn2}$ réalisable à partir du deuxième nouveau début de post-injection $SB\_NE_{nm2}$ et la fin de post-injection la plus tardive possible $SE\_NE_{mx}$ selon :

$$SD\_NE_{mn2} = SE\_NE_{mx} - SB\_NE_{mn2}$$

et
q. définition des paramètres d'injection selon :

$$SB\_HE = SB\_HE_{mn2} ;$$

$$SD\_HE = SD\_HE_{neu} ;$$

$$SE\_HE = SE\_HE_{neu2} ;$$

$$SB\_NE = SB\_NE_{mn2} ;$$

$$SD\_NE = SD\_NE_{mn2}$$

et

$$SE\_NE = SE\_NE_{mx}.$$

9.  Procédé suivant la revendication 8, **caractérisé en ce qu'**au point de fonctionnement charge-régime demandé, on maintienne, le cas échéant, à l'aide d'un étranglement de l'air d'admission et/ou d'une modification de la pression de suralimentation et/ou d'une modification du taux de recyclage des gaz d'échappement, une valeur lambda souhaitée et demandée qui s'écarte de la manière la plus faible possible d'une valeur lambda souhaitée et demandée dans le sens d'un appauvrissement du mélange.

**FIG. 1**

**S1** Festlegung SE_NEmx

**S2** Berechnung SD_NEsoll

**S3** SB_NEsoll = SE_NEmx - SD_NEsoll

**S4** SE_HEmxsoll = SB_NEsoll - D_HE-NE

**S5** (SB_HEwunsch + SD_HEsoll) < SE_HEmxsoll

— ja → SB_HE = SB_HEwunsch
SD_HE = SD_HEsoll
SB_NE = SB_NEsoll
SD_NE = SD_NEsoll
Wunsch-Abgaslambda wird erreicht

— nein →

**S6** (SE_HEmxsoll - SD_HEsoll) < SB_HEmn1

— nein → SB_HE = SE_HEmxsoll - SD_HEsoll
SD_HE = SD_HEsoll
SB_NE = SB_NEsoll
SD_NE = SD_NEsoll
Wunsch-Abgaslambda wird erreicht

— ja →

**S7** SE_HEneu = SB_HEmn1 + SD_HEsoll

**S8** SB_NEmn = SE_HEneu + D_HE-NE

**S9** SD_NEmn = SE_NEmx - SB_NEmn

**S10**
• Berechnung Momentenänderung durch Androsselung
• Berechnung Änderung Haupteinspritzung
SD_HEneu = SD_HEsoll + dSD_HE

**S11** (SE_HEneu - SD_HEneu) < SB_HEmn2

— nein → SB_HE = SE_HEneu - SD_HEneu
SD_HE = SD_HEneu
SB_NE = SB_NEmn
SD_NE = SD_NEmn
Wunsch-Abgaslambda wird erreicht

— ja →

**S12** SE_HEneu2 = SB_HEmn2 + SD_HEneu

**S13** SB_NEmn2 = SE_HEneu2 + D_HE-NE

**S14** SD_NEmn2 = SE_NEmx - SB_NEmn2

→ SB_HE = SB_HEmn2
SD_HE = SD_HEneu
SB_NE = SB_NEmn2
SD_NE = SD_NEmn2
Wunsch-Abgaslambda wird nicht erreicht

FIG. 2

EP 1 114 928 B1

EP 1 114 928 B1

Frühester
Spritzbeginn
Haupteinspr.
SB_HEmn2

Frühester
Spritzbeginn
Haupteinspr.
SB_HEmn1

Optimaler
Spritzbeginn
Haupteinspr.
SB_HEwunsch

Spätestes
Spritzende
Haupteinspr.
SE_HEmxsoll
=SE_HE

Wunsch-
Spritzbeginn
Nacheinspr.
SB_NEsoll=SB_NE

Spätestes
Spritzende
Nacheinspr.
SE_NEmx=SE_NE

°KW

Soll-Spritzdauer
Haupteinspritzung
SD_HEsoll=SD_HE

Mindestabstand
HE->NE
D_HE-NE

Berechnete
Wunsch-Spritzdauer
Nacheinspr. SD_NEsoll=SD_NE

FIG. 3

EP 1 114 928 B1

Frühester
Spritzbeginn
Haupteinspr.
SB_HEmn2

Frühester
Spritzbeginn
Haupteinspr.
SB_HEmn1

Optimaler
Spritzbeginn
Haupteinspr.
SB_HEwunsch

Spätestes
Spritzende
Haupteinspr.
SE_HEmxsoll

Wunsch-
Spritzbeginn
Nacheinspr.
SB_NEsoll

Spätestes
Spritzende
Nacheinspr.
SE_NEmx=SE_NE

Mindestabstand
HE->NE
D_HE-NE

Berechnete
Wunsch-Spritzdauer
Nacheinspr. SD_NEsoll

°KW

Änderung der Soll-
Spritzdauer der
Haupteinspritzung
dSD_HE

Soll-Spritzdauer
Haupteinspritzung
SD_HEsoll

Mindestabstand
HE->NE
D_HE-NE

Realisierbare Spritzdauer
Nacheinspr. SD_NEmn=SD_NE

Neuer Spritzbeginn
Haupteinspr.
SB_HEneu
=SB_HE

Gesamt-Spritzdauer
Haupteinspritzung
SD_HEneu=SD_HE

Spätestes
Spritzende
Haupteinspr.
SE_HEneu
=SE_HE

Realisierbarer
Spritzbeginn
Nacheinspr.
SB_NEmn=SB_NE

FIG. 4

FIG. 5